# EUROPEAN PATENT APPLICATION

(11) **EP 2 434 373 A1**
(43) Date of publication of application: **28.03.2012**
(21) Application number: 10179173.9
(22) Date of filing: 24.09.2010
(51) Int. Cl.: G06F 3/033, G06F 3/023

(54) **System for displaying information of a mouse or a keyboard with built-in display unit**

(71) Applicant: Giga-Byte Technology Co., Ltd., Taipei 231 (TW)
(72) Inventor: Lin, Yin Yu, Hsin Tien, Taipei County 231 (TW)
(74) Representative: Schwerbrock, Florian

(57) **Abstract**

System for displaying information of a mouse or a keyboard device with built-in display unit, includes a storage unit for storing a plurality of macros, a display unit for displaying the macros, and a control unit for controlling the information of macro which displayed by the display unit, wherein the control unit switch the macro stored in the storage unit and display the information of macro on the displaying unit as soon as received a switch signal, and the control unit transfer the switched macro to the computer as soon as received a transfer signal.

## Description

### BACKGROUND OF THE INVENTION

### Field of the Invention

The invention relates in general to a system for displaying information of the display, more particularly to a system for displaying a switched information of macros of a mouse or a keyboard device with built-in display unit.

### Description of the Prior Art

With the developing of information technology, computers are more and more popular with people existing in their lives. Mouse and keyboard are becoming very hommizational evolved from original character input to current data processing. Mouse and keyboard are not utilized as input interface simply, but are added some functional designs which increasing the convenience for operating computers. Some special keys are designed for mouse and keyboard which can enable relative software quickly or make computer execute a specific operation. The design of special keys make use of application program specialized for definition and record the special keys of mouse and keyboard to conduct relevant settings, such that the special keys can provide a variety of funtions.

The definition of the special keys is designed complied with the operating way of the uses to produce various macros, which include complicated executive command or input data. The user can enable the macro module stored in computers via the special keys on the mouse or keyboard, in order to achieve the function result which the user pre-defined with the mouse or keyboard. However, as for those usually operating public computers, they typically get used to personal mouse and keyboard carried on with themselves. When the user operates different computers, the application program of the special keys should be designed again to write into the different computer, and definition of the special keys on the mouse or keyboard should be conducted repeatedly to produce macro stored in computers, which brings much inconvenience to the user. It is therefore desirable to overcome the aforementioned problems if there is predefined macro stored in the mouse and keyboard of the computer and displayed them at any time.

### Summary of the Invention

It is therefore an object of the invention to provide a system for displaying information of a mouse or a keyboard device with built-in display unit which stored macro therein.

Another object of the invention is to facilitate the user to operating the mouse or keyboard stored macro.

The invention achieves the above-mentioned object by providing a system for displaying information of a mouse or a keyboard device with built-in display unit, including a storage unit for storing a plurality of macros, a display unit for displaying the macros, and a control unit for controlling the information of macros which displayed by the display unit, wherein the control unit switch the macro stored in the storage unit and display the information of macros on the display unit as soon as received a switch signal, and the control unit transfer the switched macro to the computer as soon as received a transfer signal.

Preferably, the storage unit is a flash memory module.

Preferably, the display unit is LED or liquid crystal display.

Preferably, the control unit is a multi-media control interface or a micro processor.

Preferably, the switch signal is produced via special keys or hot keys on the mouse or keyboard.

Preferably, the transfer signal is produced via special keys or hot keys on the mouse or keyboard.

The invention about system for displaying information of a mouse or a keyboard device with built-in display unit has advantages of storing macros and displaying them on the display unit, which enable the user to carry-on the mouse or keyboard with macros stored therein and check the information of macros at any time.

### BRIEF DESCRIPTION OF THE DRAWINGS

Fig.1A is a schematic diagram showing the system configuration according to the invention.;
Fig.1B and Fig.1C is respectively schematic diagram showing the switch signal and the transfer signal according to the invention;
Fig.2A shows an embodiment according to the invention;
Fig.2B shows another embodiment according to the invention.

### DETAILED DESCRIPTION OF THE INVENTION

The aforementioned objects and advantages of the present invention will be more fully understood hereinafter as a result of a detailed description when taken in conjunction with the following drawings.

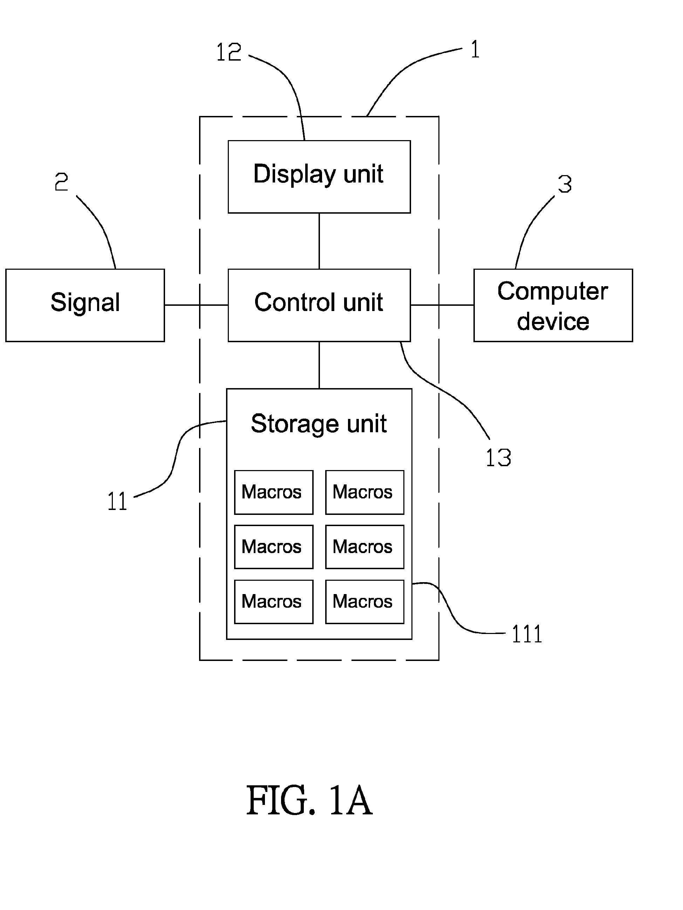

Fig.1A is a schematic diagram showing the system configuration according to the invention. System for displaying information 1 includes a storage unit 11, a display unit 12, and a control unit 13. The storage unit 11 is a flash memory module for storing a plurality of macros 111. The capacity and storage quantity of the macros 111 stored in the storage unit 11 are not limited according to the invention. The display unit 12 displays the information of macros 11. The control unit 13 is a multi-media control interface or a micro-processor, which receives a signal 2 to switch or transfer the macro 111 by the control unit 13 and display the information of macros on the display unit 12. The control unit 13 is coupled electrically to a computer device 3.

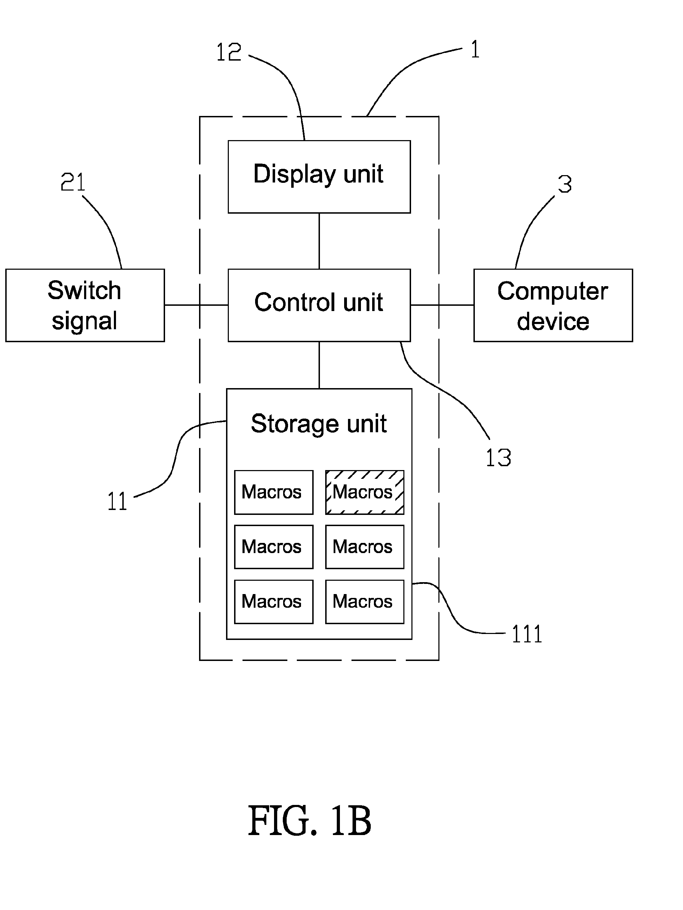

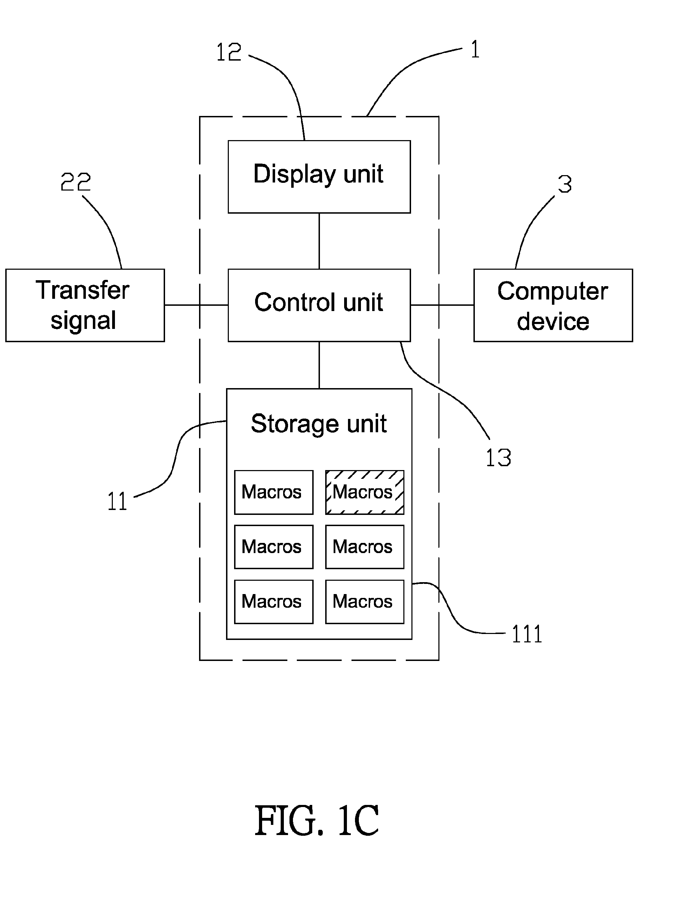

Fig.1B and Fig.1C are respectively schematic diagram showing the switch signal and the transfer signal according to the invention, wherein the signals are produced via the special keys or hot keys of the mouse or keyboard. The special keys are not limited on the mouse or keyboard, which can be designed on any related device according to demand. The signal 2 further includes a switch signal 21 and a transfer signal 22. When the control unit 13 receives the switch signal 21, the control unit 13 switches the macros 111 stored in the storage unit 11 at once and display the information of macros on the display unit 12. The macros 111 switched by the control unit 13 is judged by the option of the special keys or the continuous switching mode. When the control unit 13 receives the transfer signal 22, the control unit 13 transfers the switched macro 111 to the computer device 3 at once, where the computer device 3 accept the macros 111 and performs the instructions which the macros defined.

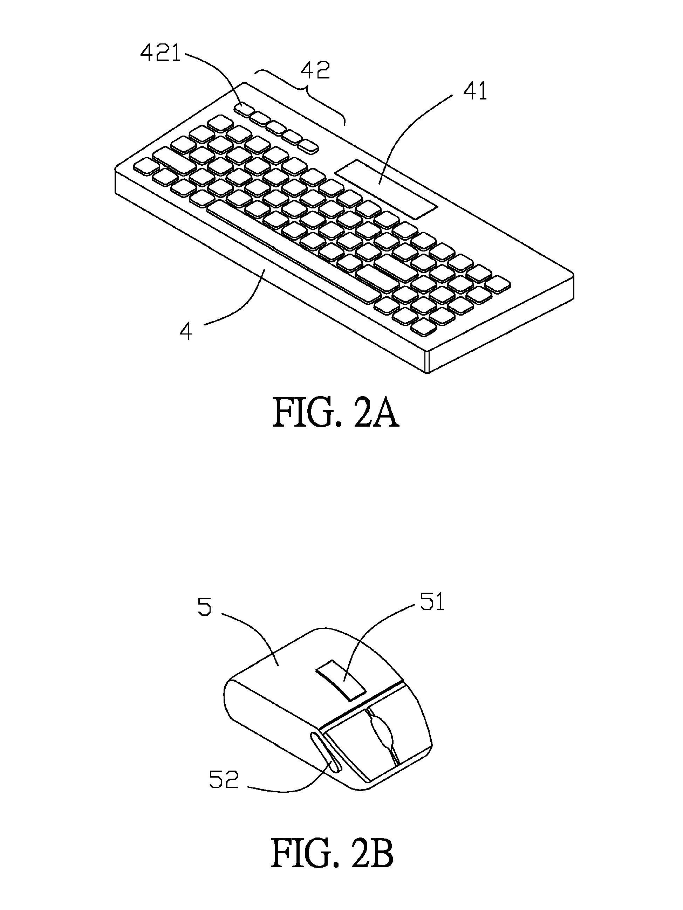

Fig.2A shows an embodiment according to the invention. Now referring to Fig.2A annexed with Fig.1B and Fig. 1C, the keyboard 4 is installed with a system for displaying information I as described above, and is equipped with a display unit 41 and a region of macro keys 42, wherein the display unit 41 is equal to the above-mentioned display unit 12, which may be LED or liquid crystal display. The display unit 41 is able to display the information of the macros stored in the storage unit 11 switched by the control unit13. The region of the macro keys 42 is designed to produce signals 2. The region of the macro keys 42 includes a plurality of macro keys 421, which is operated to produce switch signal 21 and transfer signal 22. System for displaying information 1 displays the information of the switched macro 111 on the display unit 41, and transfers the switched macro 111 to the computer device 3, which is disclosed foregoing and not expatiated now.

Fig.2B shows another embodiment according to the invention. Now referring to Fig.2B annexed with Fig.1B and Fig.1C, the mouse 5 is installed a system for displaying information 1 as described above, and is equipped with a display unit 51 and a plurality of macro keys 52, wherein the display unit 51 is equal to the above-mentioned display unit 12, which may be LED or liquid crystal display. The display unit 51 is able to display the information of the macros stored in the storage unit 11 switched by the control unit13. The macro keys 52 are operated to produce switch signal 21 and transfer signal 22, which enable the system for displaying information 1 to display the information of the switched macro 111 on the display unit 51, and transfer the switched macro 111 to the computer device 3, which is disclosed foregoing and not expatiated now.

As described above, system for displaying information of a mouse or a keyboard device with built-in display unit according to the invention is installed in the mouse or keyboard. The macros are stored in the mouse or keyboard and can be performed on different computer devices at any time, without writing application program into the computer to define macros, which brings convenience in use and meets the demand of the users.

Whilst there has been described in the foregoing description preferred embodiments of the present invention, it will be understood by those skilled in the technology that many variations or modifications in details of design, construction or operation may be made without departing from the present invention.

## Claims

1. A system for displaying information of a mouse with built-in display unit, comprising:
a storage unit for storing a plurality of macros;
a display unit for displaying the information of macros ; and
a control unit for controlling the macros and the information of macros which displayed by the display unit;
**characterized by** wherein the control unit switches the macro stored in the storage unit and display the information of macro on the display unit as soon as received a switch signal, and the control unit transfers the switched macro to the computer as soon as received a transfer signal.

2. A system for displaying information of a mouse with built-in display unit as claimed in claim 1, wherein the storage unit is a flash memory module.

3. A system for displaying information of a mouse with built-in display unit as claimed in claim 1, wherein the display unit is LED or liquid crystal display.

4. A system for displaying information of a mouse with built-in display unit as claimed in claim 1, wherein the control unit is a multi-media control interface or a micro processor.

5. A system for displaying information of a mouse with built-in display unit as claimed in claim 1, wherein the switch signal is produced via special keys or hot keys on the mouse.

6. A system for displaying information of a mouse withbuilt-in display unit as claimed in claim 1, wherein the transfer signal is produced via special keys or hot keys on the mouse.

7. A system for displaying information of a keyboard withbuilt-in display unit, comprising:
a storage unit for storing a plurality of macros;
a display unit for displaying the information of macros; and
a control unit for controlling the macros and the information of macros which displayed by the display unit;
wherein the control unit switches the macro stored in the storage unit and display the information of macro on the display unit as soon as received a switch signal, and the control unit transfers the switched macro to the computer as soon as received a transfer signal.

8. A system for displaying information of a keyboard with built-in display unit as claimed in claim 7, wherein the storage unit is a flash memory module.

9. A system for displaying information of a keyboard with built-in display unit as claimed in claim 7, wherein the display unit is LED or liquid crystal display.

10. A system for displaying information of a keyboard with built-in display unit as claimed in claim 7, wherein the control unit is a multi-media control interface or a micro processor.

11. A system for displaying information of a keyboard with built-in display unit as claimed in claim 7, wherein the switch signal is produced via special keys or hot keys on the keyboard.

12. A system for displaying information of a keyboard with built-in display unit as claimed in claim 7, wherein the transfer signal is produced via special keys or hot keys on the keyboard.
